# EUROPEAN PATENT APPLICATION

(11) **EP 1 772 085 A1**
(43) Date of publication of application: **11.04.2007**
(21) Application number: 05021773.6
(22) Date of filing: 06.10.2005
(51) Int. Cl.: A47J 37/08

(54) **Toaster**

(71) Applicant: BELL XPRESS A/S, 8310 Tranbjerg J (DK)
(72) Inventor: Jensen, Timothy Jacob, 7840 Højslev (DK)
(74) Representative: Nielsen, Leif

(57) **Abstract**

The present invention relates to a toaster (1) comprising a number of side panels (2), each provided with a number of heating elements (14), a number of end panels (3, 4) and a base part (5), where the side panels (2) and the end panels (3, 4) are connected to the base part (5), wherein each of the side panels (2) at a lower edge part is pivotally hinged to the base part (5) and adapted to be unfolded and folded between vertical and horizontal positions of use, respectively.

## Description

### Field of the Invention

The present invention relates to a toaster comprising a number of side panels, each provided with a heating element, a number of end panels and a base part, where the side panels and the end panels are connected to the base part.

### Background of the Invention

In everyday meals (e.g. breakfast, brunch, lunch, dinner etc.) bread (e.g. white bread, rye bread, bagels, buns, rolls, toast bread, pita, French loaf, pan cakes etc.) constitutes a significant part.

Some people prefer to toast bread to enhance the flavour or improve the taste of e.g. stale bread.

In general two main types of electrical toasters exist; a vertical toaster and a flat bed toaster.

In principle the vertical toaster functions by placing a bread on a vertical displaceable carrier, which is arranged in a slot between two side panels, each provided with heating elements, hence the vertical displaceable bread carrier is brought into the toaster to position the bread between the side panels. After toasting, the carrier can be released automatically or manually and the toasted bread is brought up and is ready to serve.

In principle the flat bed toaster functions by placing bread on or above a heating surface to toast one side of the bread at the time.

The vertical toaster and the flat bed toaster are generally used for the same purpose, however, for some purposes one kind of toaster is used in preference to the other.

On the one hand the vertical toaster toasts the bread on both sides at the same time, hence it is time-saving in relation to the flat bed toaster and furthermore it provides toasted bread, which is evenly toasted on both sides. However, the bread inserted in the vertical toaster can only be of a certain thickness.

On the other hand the flat bed toaster may e.g. be used to toast bread on one side only, and it can be used to toast bread (e.g. baguettes, buns, etc.) with a thickness preventing it from being inserted into a vertical toaster.

To obtain the advantages of both toasters it is necessary to acquire both a vertical toaster and a flat bed toaster. However, toasters are not necessarily cheap and two toasters take up unnecessary storage space in the kitchen.

### Object of the Invention

It is the object of the present invention to provide an improved toaster, which can be used either as a vertical toaster or as a flat bed toaster.

The object is achieved with a toaster as described in the preamble of claim 1 and where each of the side panels at a lower edge part is pivotally hinged to the base part and adapted to be unfolded and folded between vertical and horizontal positions of use, respectively.

### Description of the Invention

According to a preferred embodiment of the invention the toaster comprises a number of side panels, each of which are provided with a number of heating elements, a number of end panels and a base part, where the side panels and the end panels are connected to the base part.

When used as a vertical toaster, both the side panels and the end panels are parallel to each other and arranged opposite each other, and the side panels are arranged between the end panels, thus providing a slot between them wherein the bread can be arranged.

When used as a flat bed toaster, the side panels are arranged side-by-side, thus the heating elements provide a flat heating surface. According to a first embodiment of the present invention the carrier member is arranged between the side panels and according to a second embodiment of the present invention there is no space between the side panels, hence providing a flat, coherent heating surface. The end panels are arranged parallel to each other and arranged opposite each other, and the side panels are arranged between the end panels.

To transform the toaster into a vertical toaster and back to a flat bed toaster again, each of the side panels is at a lower edge part pivotally hinged to the base part and adapted to be unfolded and folded between vertical and horizontal positions of use, respectively.

The pivotal hinging of each of the side panels at a lower edge part causes the side panel's upper edge to move outwards and downwards to reach a horizontal position, where the side panel's upper and lower edge is level, and the side panel is horizontally positioned.

The pivotal hinging of each side panel at a lower edge part may in said second embodiment be shaped in such way that it allows horizontal movement of the side panels, so the lower edge parts of the side panels are moved together, thus providing a flat coherent heating surface. According to this second embodiment of the present invention the heating surface is a flat coherent surface hence it is possible to obtain even toasting of the bread on a flat bed toaster, although the bread overlaps the side panels.

The base part is used as support for the toaster panels regardless of whether the toaster is a vertical or a flat bed toaster. The base part can be provided with extra load to move the point of gravity downwards, thus preventing the toaster from tumbling. Furthermore, the base part can be used for directing wires/cables between the end panels and/or to contain different mechanical arrangements.

When functioning as a vertical toaster the bread is arranged between the vertical side panels. To prevent the bread from disappearing between the side panels, in which case the bread is difficult to get hold of again without having to open the toaster, the toaster furthermore comprises a vertical displaceable carrier member, which is arranged in between the side panels, when the toaster is used as a vertical toaster. The displaceable carrier member may be of a type, which is well known in prior art vertical toasters for securing that the bread pops up from the toaster for a person easily to grip it.

The carrier member ensures that the bread is supported, and typically the carrier member has at least two vertical positions. In a first position a part or the entire bread projects upwards from the toaster, thus making it easy to insert/remove the bread. In a second position the carrier member has moved down between the side panels, and the bread is completely submerged in the toaster, thus ensuring even toasting of the bread loaf.

To move the carrier member vertically between the side panels, the toaster furthermore comprises a displacement means for the carrier member, which displacement means comprises a slide and release means.

According to one embodiment of the present invention the slider is visible and attached to either the end panels or the side panels, and it is mechanically connected to the carrier member so vertical movement of the slider results in a similar vertical movement of the carrier member.

According to one embodiment of the present invention the slider causes an engagement of the carrier member or the slider when moved to the bottom of the space between the side panels, thus preventing the slider from moving upwards.

This engagement of the carrier member or the slider is released by a release means, which can be activated by a release button, arranged visibly on either the end panels or the side panels, or by a timer which is set when the carrier member is engaged.

An alternative displacement means comprises a motor, which, when activated, moves the carrier member vertically up and down between the side panels.

To transform the toaster into a vertical toaster and back into a flat bed toaster, one end panel comprises activation means for the pivotal unfolding and/or folding of the side panels.

According to one embodiment of the present invention the activations means comprises a button, which, when pushed, releases the engagement of the side panels and so the side panels start moving pivotally from a vertical, parallel position to a horizontal position, thus providing a flat bed toaster.

The return of the side panels from the horizontal side-by-side position to the vertical, parallel position is carried out manually. To pivotally move the side panels in a controlled manner the activation means e.g. comprises springs, chock absorbers, and/or sprocket wheels.

In an alternative embodiment of the present invention the activations means comprises an activation button, which, when pushed a first time, activates a motor, which moves the side panels from the vertical, parallel position to the horizontal position, and when the button is pushed a second time, the motor moves the side panels from the horizontal position to the vertical, parallel position.

To transform the toaster into a flat bed toaster with a flat heating surface, the carrier member is in one embodiment of the present invention adapted to move into a position between the side panels.

In an alternative embodiment of the present invention the carrier member is adapted to move into a low or hidden position in the base part, thus allowing the side panels to move pivotally and connect in the toaster midpoint.

The movement of the carrier member occurs at the same time or slightly before the side panels are moved pivotally. When the toaster transforms back into a vertical toaster, the carrier member again moves up to the first upper position between the side panels, hence making it possible to arrange bread on the carrier member.

To optimise the toasting one end part comprises a heating element control panel. This control panel makes it possible to control and/or adjust the toasting process. E.g. it is possible to select and/or re-select the mode of toasting (e.g. normal, defrosting, reheating), control the heating elements (e.g. by looking at the colour of the bread) and to set and/or reset a timer (e.g. toasting/grill time).

To enhance the toaster user friendliness and to ensure the correct toasting process for the different types of bread, the control panel comprises a visual indicator. Because of this indicator, e.g..a display, it is possible to tell e.g. the mode of toasting, the degree of browning and/or the toasting/grill time. An alternative to a display is a number of light indicators, where the light patterns indicate the aforementioned parameters.

To protect the electrical installations and the control panel from the heat, which is generated from the heating elements during use, the end panels comprise a heat protection wall, which is made of a material with a low heat coefficient and e.g. is made of ceramic, glass, gypsum, fibres or the like.

According to a preferred embodiment of the present invention both end panels comprise a heat protection wall, thereby protecting electrical installations and/or the control panel in either end panel.

Like many ordinary kitchen appliances the toaster according to the present invention is run by electricity, thus the toaster must be connected to the electricity grid. Hence the toaster is provided with a cord and a plug.

The cord is of a substantial length, typically 0,5-2,0 meters, making it possible to position and use the toaster from a distance of the plug outlet. To prevent the cord from taking up space on the table, the toaster is provided with a cord compartment, where the excess cord can be curled up and hidden.

For safety reasons it is important to place the toaster securely on the surface, thereby preventing impacts from moving or tumbling the toaster. Therefore the base part comprises a rubber foot, which provides a cord compartment.

As an alternative to a rubber foot any kind of foot with at least one surface facing down will do, where the surface facing down has a high friction resistance coefficient or is slightly adhesive. The foot can therefore be formed of alternative materials such as wood, plastic, metal, glass or the like.

When toasting bread the surface of the bread is heated and demoisturised, thus the bread crumbles, when moved up and down in the vertical toaster or when turned on the flat bed toaster. To collect these crumbles the base part comprises a removable crumb tray, which is adapted to be removed for emptying or cleaning.

The crumb tray is arranged in connection with the base part to allow the collection of the crumbles from the vertical toaster. When the toaster is a flat bed toaster, the crumbles falling into the side panels during toasting are collected by the crumb tray when the side panels are folded back to upright position during the transforming of the flat bed toaster into a vertical toaster.

### Description of the Drawing

The invention is explained in more details in the following with reference to the figures, where:
fig. 1-3 show a vertical toaster according to the invention,
fig. 4-6 show a flat bed toaster according to the invention,
fig. 7 shows a rubber foot of a toaster according to the invention,
fig. 8 shows the transformation from vertical toaster to flat bed toaster, and
fig. 9 shows the crumb tray.

### Detailed Description of the Invention

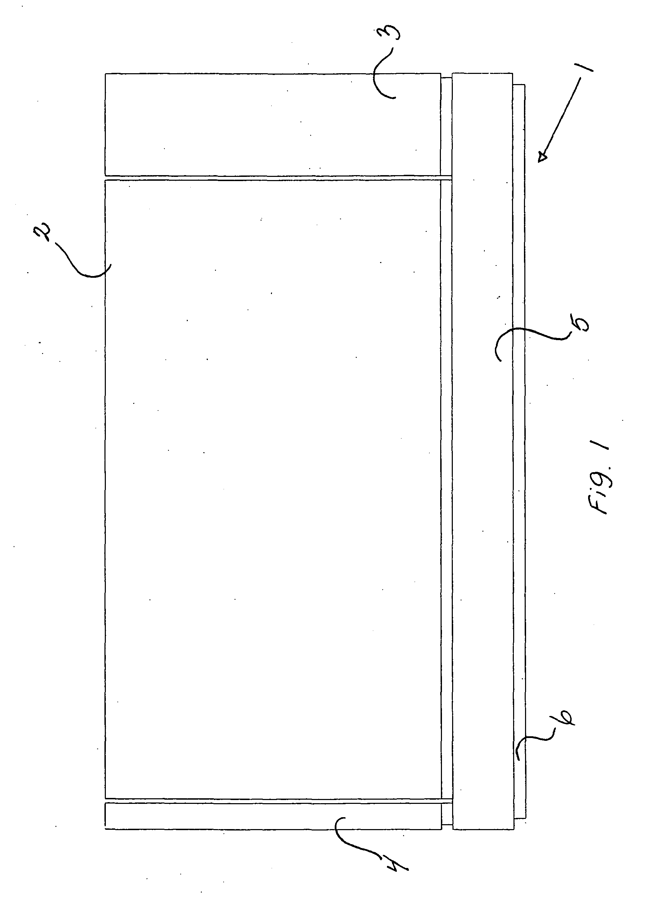

Fig. 1-3 show a vertical toaster 1.

The toaster 1 comprises side panels 2, each of which is provided with a heating element (not shown), end panels 3, 4 and a base part 5, where the side panels 2 and the end panels 3, 4 are connected to the base part 5, which is provided with a rubber foot **6.** As an alternative to the illustrated rubber foot, it is possible to use a number of separate feet.

The end panel **3** is at the side surface provided with the slider **7** for the carrier member **11** and an eject button **8** for the crumb tray (not shown). The end panel **3** is at the top surface provided with a control panel **9,** which is provided with a display **12.** Hence it is possible to e.g. choose a variation of toasting programs concurrent with visual information readable of the display **12.**

The end panel **4** is at the top surface provided with a button **10** to activate the transformation of the toaster **1** from vertical toaster to flat bed toaster.

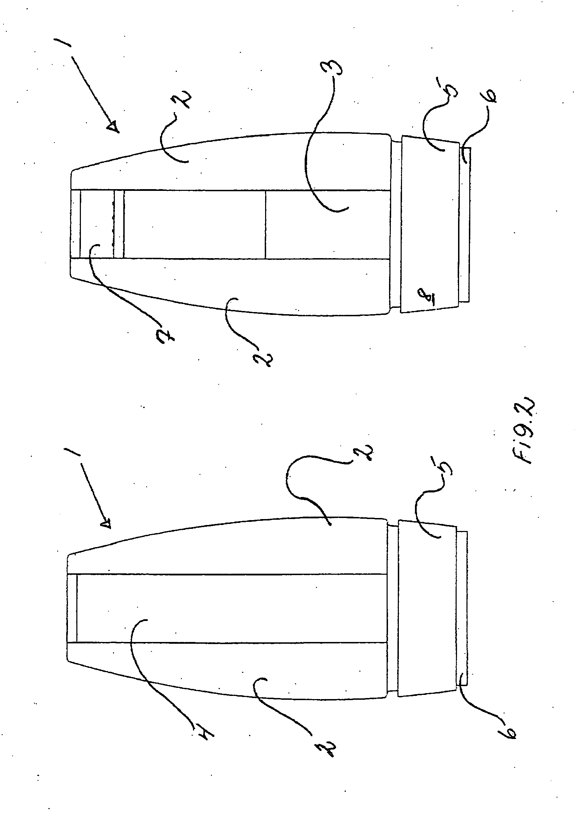

From fig. 3 it is possible to see the carrier member **11,** which is arranged between the side panels **2.** The vertical movement of the carrier member **11** is determined by movement of the slider 7 illustrated in fig. 2.

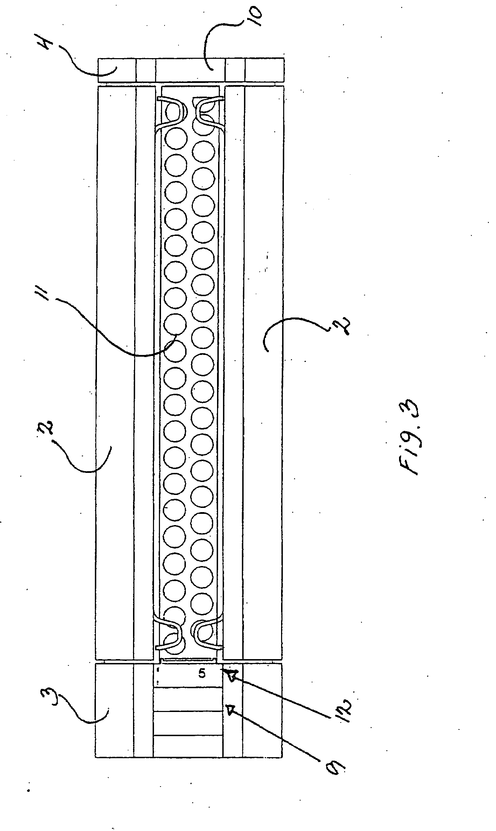

Fig. 4-6 shows a flat bed toaster **1.** The side panels **2** are pivotally moved down to a horizontal position, where the side panels **2** provide an upwards facing flat heating surface **15,** where the side panels **2** are separated by the carrier member **11.** Each side panel **2** is provided with a number of heating elements **14.**

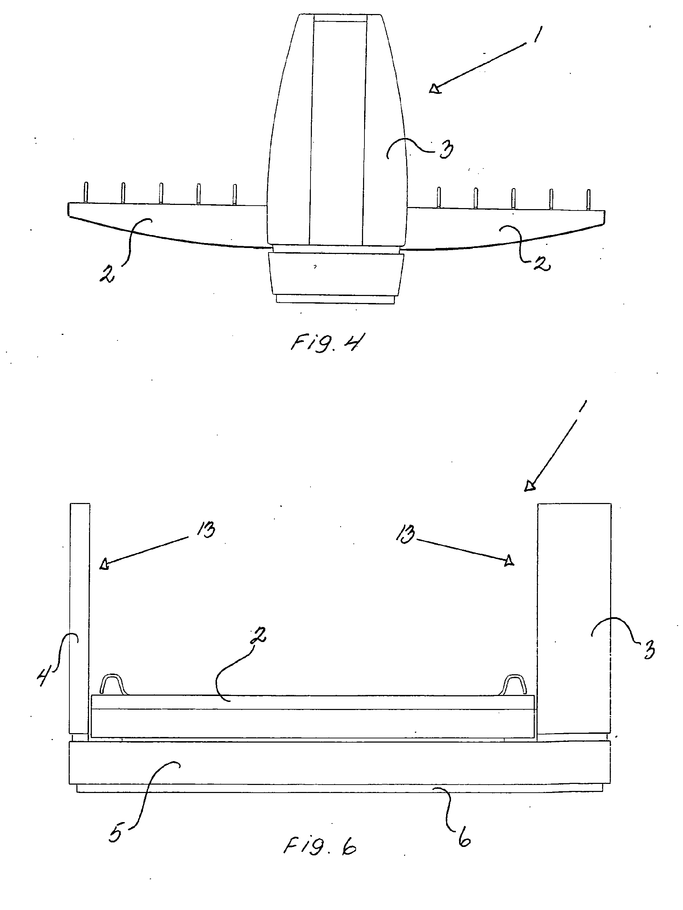

Fig. 6 shows that each end panel **3, 4** is provided with a heat protection wall **13,** which protects the electrical and mechanical components (not shown) arranged inside the end panels **3, 4.**

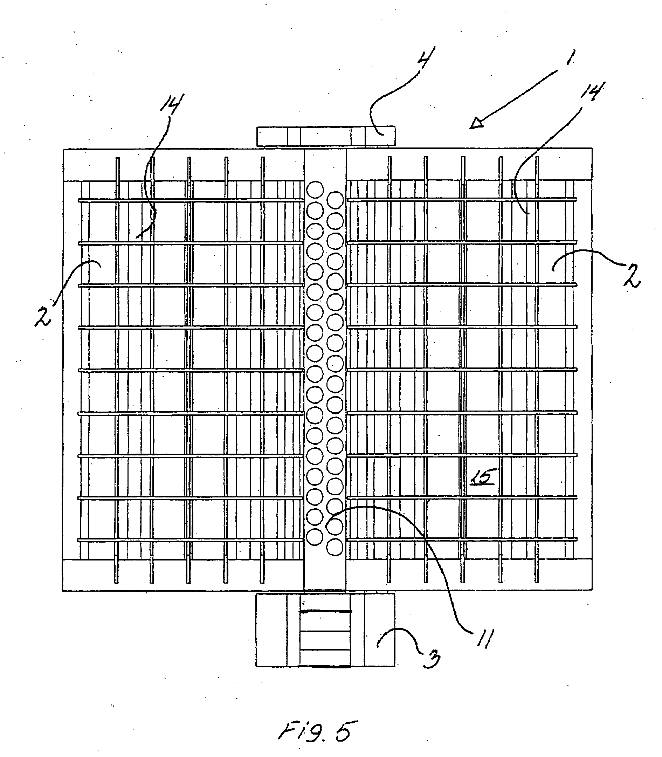

Fig. 7 shows the rubber foot **6** attached to the bottom of the base part **5.** The rubber foot provides a cord compartment **18,** wherein a wire clamp **17** is attached onto the bottom of the base part **5.** The cord **16** can now be winded around the wire clamp **17** and the length of the cord **16** can be customised.

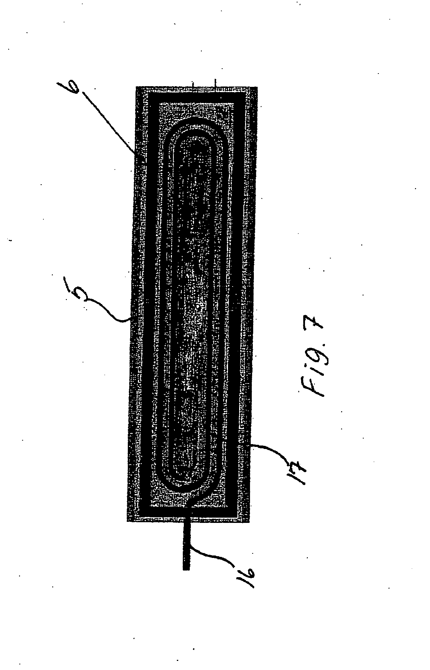

Fig. 8 shows the transformation from vertical toaster to flat bed toaster. When using a vertical toaster, the bread slices **20** are positioned on the carrier member (not shown), and the slider **7** is moved to the bottom of the toaster **1** and e.g. during the toasting the slider moves upwards until the bread slices **20** are toasted and ready to serve.

When using a flat bed toaster the side panels **2** are pivotally moved down to a horizontal position, and buns **21** or bread slices **20** are positioned on the coherent heating surface **15.** To enhance the flavour on both sides of the buns **21** or bread slices **20** it is necessary to manually turn over the buns **21** or bread slices **20.**

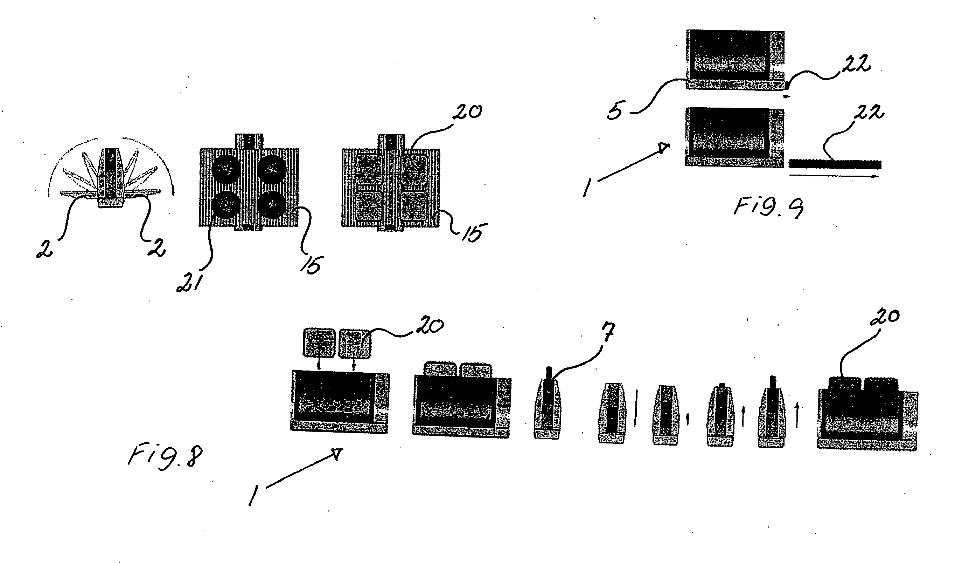

Fig. 9 shows the crumb tray **22,** which is arranged inside the base part **5,** and the crumb tray **22** can be removed by pushing an eject button (not shown) on base part **5.** The crumb tray **22** must be removed and cleaned at regular time intervals.

## Claims

1. Toaster (1) comprising a number of side panels (2), each provided with a number of heating elements (14), a number of end panels (3,4) and a base part (5), where the side panels (2) and the end panels (3, 4) are connected to the base part (5), **characterised in that** each of the side panels (2) at a lower edge part is pivotally hinged to the base part (5) and adapted to be unfolded and folded between vertical and horizontal positions of use, respectively.

2. Toaster (1) according to claim 1, **characterised in that** the toaster (1) furthermore comprises a vertical displaceable carrier member (11), which is arranged between the side panels (2).

3. Toaster (1) according to claim 2, **characterised in that** the toaster (1) furthermore comprises a displacement means for the carrier member (11), which displacement means comprises a slider (7) and release means.

4. Toaster (1) according to claim 1, **characterised in that** one end part (4) comprises activation means (10) for the pivotal unfolding and/or folding of the side panels (2).

5. Toaster (1) according to any of the claims 1-4, **characterised in that** the side panels (2) are made of a heat resistant and/or a see-through material.

6. Toaster (1) according to any of the claims 1-5, **characterised in that** one end part (3) comprises a control panel (9) for the heating element (14).

7. Toaster (1) according to claim 6, **characterised in that** the control panel (9) comprises a visual indicator (12).

8. Toaster (1) according to any of the claims 1-7, **characterised in that** the end panels (3, 4) comprise a heat protection wall (13).

9. Toaster according (1) to any of the claims 1-8, **characterised in that** the base part (5) comprises a rubber foot (6), which provides a cord compartment (18).

10. Toaster (1) according to any of the claims 1-9, **characterised in that** the base part (5) comprises a removable crumb tray (22).
